# EUROPÄISCHE PATENTSCHRIFT

(11) **EP 1 420 504 B1**
(45) Veröffentlichungstag und Bekanntmachung des Hinweises auf die Patenterteilung: **13.06.2012**
(21) Anmeldenummer: 03405802.4
(22) Anmeldetag: 10.11.2003
(51) Int. Cl.: H02K 7/06, H02K 11/00, F16H 25/20, F16H 25/24

(54) **Endschaltereinheit für einen Linearantrieb**
Limit switch for a linear drive
Interrupteur de fin de course pour actionneur linéaire

(30) Priorität: 15.11.2002 CH 19242002
(43) Veröffentlichungstag der Anmeldung: 19.05.2004
(73) Patentinhaber: AB SKF, 415 50 Göteborg (SE)
(72) Erfinder: Greilinger, Daniel G., 4466 Ormalingen (CH); Tschudin, Beat, 4153 Reinach (CH)
(74) Vertreter: EGLI-EUROPEAN PATENT ATTORNEYS

(56) Entgegenhaltungen:
- EP-A- 0 551 197
- EP-A- 0 662 573
- GB-A- 643 863
- US-A- 3 682 283
- US-A- 5 094 114

## Beschreibung

Die Erfindung betrifft eine Endschaltereinheit für einen Linearantrieb gemäss den Merkmalen des Patentanspruchs 1.

Linearantriebe mit einem linear bewegbaren Schubrohr und einer im Schubrohr geführten und von einer Antriebseinheit angetriebenen Spindel finden heute weitverbreitete Verwendung. Sie werden häufig verwendet, um Vorrichtungen oder Vorrichtungsteile linear um kurze Strecken zu verschieben oder um Klappen, Deckel und dergleichen zu öffnen und zu schliessen.

US-A-3682283 offenbart einen motorbetriebenen Aktuator, bestehend aus einem elektrischen Motor, welcher zum Antrieb einer Spindel und eines damit im Eingriff stehenden Schubrohrs dient, wobei die Rotation der Spindel zu einer reziproken Bewegung des Schubrohrs führt. Ein Sicherheitsmechanismus ist im Aktuator integriert, um automatisch den Motor zu unterbrechen, wenn eine Überbelastung entsteht. Der Sicherheitsmechanismus besteht aus einem Paar Endschalter welche durch Verschiebung der Spindel betätigt werden.

US-A-5094114 offenbart einen Apparat zur Kontrolle der Vorschubgeschwindigkeit eines Maschinentisches. Die Rotation einer Kugelgewindespindel wird umgewandelt in eine reziproke Bewegung des Tisches. Ein Positionsdetektor signalisiert die Stellung der Kugelgewindespindel und ein Geschwindigkeitsverringerungsgerät kann hierauf die Umdrehungen der Kugelgewindespindel reduzieren.

GB 643,863 A offenbart einen Linearantrieb, welcher als Stellglied für Anstellklappen eines Flugzeugs Anwendung findet. Dieser Linearantrieb enthält ein in einem Mantelrohr linear bewegbares Schubrohr, welches durch eine angetriebene Spindel zum Ein- und Ausfahren geführt wird.

Tendenziell geht die Entwicklung von Linearantrieben dieser Art in eine Richtung, dass versucht wird, immer grössere Wirkungsgrade zu erzielen. Dabei werden Spindeln mit so grossen Gewindesteigungen eingesetzt, dass die Selbsthemmungsgrenzen überschritten werden. In der Folge müssen zwischen den Spindeln und den Antriebsachsen der Antriebseinheit zusätzliche Bauteile, wie beispielsweise Schlingfederbremsen (wrap spring clutches/brakes) eingesetzt werden, um zu verhindern, dass die vom Linearantrieb angehobene Last beim Abstellen des Antriebsmotors in der Antriebseinheit die Spindel wieder in der entgegengesetzten Richtung zu drehen vermag. Derartige Schlingfederbremsen (oder allgemeiner ausgedrückt: Bremsvorrichtungen zur Übertragung oder Abbremsung von Drehbewegungen) sind bereits wohlbekannt. Sie werden wegen ihrer Einfachheit und rein mechanischen Bauweise häufig eingesetzt und sie bewirken, dass eine Drehkraftübertragung nur von der Antriebseinheit (bzw. vom Motor der Antriebseinheit) auf die Spindel, nicht aber von der Spindel auf die Antriebseinheit erfolgen kann.

Eine weitere gegenwärtige Entwicklungstendenz geht dahin, dass zur Detektierung der Endstellungen der Spindeln in den Schubrohren (d.h. in den Positionen, in denen die Spindel ganz eingefahren oder ganz ausgefahren ist) Endschalter verwendet werden, die fest mit der Antriebseinheit verbunden und in der Nähe derselben angeordnet sind. Hier geht es grundsätzlich darum, störungs- und verletzungsanfällige bewegliche elektrische Drahtverbindungen oder elektrische Drahtverbindungen, die sich in unmittelbarer Nähe beweglicher Teile befinden, zu vermeiden. Damit kann die Störanfälligkeit der ganzen Vorrichtung beträchtlich reduziert werden.

Es sind Linearantriebe bekannt (unter anderem Produkte der Anmelderin), bei denen mittels einer zwischen einem Mantelrohr (auch Führungsrohr genannt) und dem Schubrohr linear verschieblich angeordneten Schaltstange, deren effektive Hin-und Herbewegung durch geeignet angebrachte Mitnehmerteile am Schubrohr nur einen kleinen Bruchteil der gesamten Hin- und Herbewegung des Schubrohres ausmacht, auf Endschalter, die fest in der Nähe der Antriebsvorrichtung angebracht sind, übertragen wird.

Die Kombination dieser beiden Entwicklungstendenzen führt allerdings in der Anwendung zu neuen Problemen.

Schlingfederbremsen sind zwar ein äusserst wirksames und einfaches in eine Drehachse einsetzbares Mittel zur Verhinderung von Drehkraftübertragungen in eine Drehrichtung, in die keine Drehkraftübertragung erfolgen darf, sie haben aber auch den Nachteil, dass konstruktionsbedingt ein kleiner Drehweg (Drehwinkel) bis zum wirksamen Eintritt der vollen Bremswirkung notwendig ist. Dies hat zur Folge, dass eine vom Linearantrieb angehobene Last beim Abstellen des Antriebsmotors in der Antriebseinheit die Spindel wieder um einen kleinen Drehwinkel in die entgegengesetzten Richtung zu drehen vermag. Dies bewirkt wiederum ein zwar kleines, für denjenigen Endschalter, der zur Detektierung der Spindelposition in der voll ausgefahrenen Stellung verwendet wird, unter Umständen aber folgenreiches 'Zusammensacken' von Spindel und Schubrohr (d.h. es resultiert ein kleines Einfahren der Spindel in das Schubrohr). Wird nämlich eine Dauerkontaktsteuerung für das Ein- und Ausfahren verwendet, was meist der Fall und meist sogar gefordert ist, so genügt das erwähnte Zusammensacken um den elektrischen Kontakt des Endschalters wieder freizugeben, was bedeutet, dass die Information an die Motorsteuerung ergeht, dass das Schubrohr die Endstellung noch nicht erreicht habe. In der Folge kommt es (solange der Dauerkontaktbefehl ansteht) zu einer andauernden Selbstunterbrecherschaltung (d.h. es resultiert ein dauerndes Ein- und Ausschalten des Antriebs), wobei in der Folge die elektrische und mechanische Belastung rasch zu einer Überhitzung des Antriebs und sogar zur Zerstörung von Bauteilen führen kann.

Ziel der Erfindung ist es, eine Endschaltereinheit für einen Linearantrieb anzugeben, bei der die erwähnten Probleme vermieden werden können, bei der aber dennoch die Vorteile einer mit einer Schlingfederbremse bestückten (oder mit einer gleich oder ähnlichen wirkenden Vorrichtung bestückten) und schaltstangenbetätigten Bauweise ausgenützt werden können.

Diese Aufgabe wird durch die Merkmale des Patentanspruchs 1 gelöst.

Bei einer Endschaltereinheit für einen Linearantrieb mit einer von einem Antriebsmotor angetriebenen Antriebseinheit, einer in einem linear bewegbaren Schubrohr geführten und von der Antriebseinheit angetriebenen Spindel, einer zwischen dem Schubrohr und einem Mantelrohr ebenfalls linear bewegbaren Schaltstange und einer zwischen einer Antriebsachse der Antriebseinheit und der Spindel eingebauten Bremsvorrichtung zur Übertragung oder Abbremsung von Drehbewegungen (z.B. eine Schlingfederbremse, eine Reibungskupplung oder dergleichen), bei der mindestens ein Endschalter der Endschaltereinheit von der Schaltstange betätigbar ist, weist der mindestens eine Endschalter der Endschaltereinheit bezüglich einer Verschiebebewegung der Schaltstange zumindest in einer ausgefahrenen Position des Schubrohrs eine Schalthysterese auf. Die Schalthysterese ist dabei auf einen im wesentlichen von der Schlingfederbremse bedingten Ansprechweg beim Ausschalten des Antriebsmotors abgestimmt.

Durch die Einführung der Schalthysterese gelingt es, Selbstunterbrecherschaltungseffekte in den Endlagen des Schubrohrs zu vermeiden.

Wird mit dem erfindungsgemässen Linearantrieb gegen eine Last gedrückt (z.B. das Hochheben eines Fensterdaches), so muss zumindest der Endschalter für die Detektierung der maximal ausgefahrenen Position des Schubrohres mit einer Schalthysterese versehen werden, weil hier der erwähnte störende Selbstunterbrechungseffekt auftreten kann. Bei der Detektierung der maximal eingefahrenen Position braucht es in dieser Situation grundsätzlich keine Schalthysterese, weil hier die Kräfte immer in eine Richtung wirken, in der kein Selbstunterbrechungseffekt auftreten kann.

Vorteilhaft wird aber auch die Detektierung der maximal eingefahrenen Position des Schubrohres mit einer Schalthysterese ausgestattet, weil es grundsätzlich auch möglich ist, den Linearantrieb auf Zug zu belasten und dann tritt der störende Selbstunterbrechungseffekt bei der Detektierung der maximal eingefahrenen Position des Schubrohres auf. Mit geringem Mehraufwand lässt sich der Einsatzbereich des Linearantriebs beträchtlich erhöhen.

Als vorteilhaft erweist es sich auch, wenn zur Detektierung der maximal ausgefahrenen Position des Schubrohrs ein erster Endschalter und zur Detektierung der maximal eingefahrenen Position des Schubrohrs ein zweiter Endschalter verwendet wird. Es können dann zwei gleiche, kostengünstige und einfach gebaute Endschalter verwendet werden. Grundsätzlich sind auch Lösungen möglich, bei denen zur Detektierung der beiden Endlagen des Schubrohrs nur ein einziger Endschalter, beispielsweise ein solcher mit einem Umschaltkontakt, verwendet wird. Ebenso können auch kontaktlos arbeitende Endschalter eingesetzt werden.

Die konstruktive erfindungsgemässe Lösung verwendet vorzugsweise einen gegenüber einem Schieber verschiebbaren Schaltteil, wobei der Schieber mit der Schaltstange verbunden ist und demzufolge deren Bewegungen mitmacht. Der Schieber und das Schaltteil sind beide auf einem Führungsstück linear geführt. Das Schaltteil weist eine Ausnehmung auf, in der der Schieber gegenüber dem Schaltteil hin- und herbewegbar ist, das Schaltteil ist vom Schieber mitnehmbar und die Mitnahmebewegung zufolge der Verschiebebewegung der Schaltstange bewirkt die Schalthysterese. Die Teile sind einfach und leicht herstellbar und sie lassen sich ohne Schwierigkeiten auf einer Platine mit den Endschaltern in einer Weise integrieren, dass Zusammenbau, Einbau, Funktionsüberprüfung und Ersatz besonders einfach sind. Ausserdem ist die Einheit auch als Ersatz zu Einheiten ohne Hysteresefunktion leicht austauschbar.

In den Zeichnungen zeigen:
- Fig. 1: die grundsätzliche Anordnung eines gattungsgemässen Linearantriebs,
- Fig. 2: ein 3D-Teilschnitt durch ein Schubrohr mit einer Spindel in ausgefahrener Position bei einem Linear- antrieb mit einer erfindungsgemässen Endschalter- einheit,
- Fig. 3: ein 3D-Teilschnitt durch ein Schubrohr mit einer Spindel in eingefahrener Position bei einem Linear- antrieb gemäss Fig. 2,
- Fig. 4: einen Querschnitt durch ein Mantelrohr,
- Fig. 5: eine Draufsicht auf eine erfindungsgemässe End- schaltereinheit in der eingefahrenen Position der Spindel,
- Fig. 6: eine Draufsicht auf eine erfindungsgemässe End- schaltereinheit in der ausgefahrenen Position der Spindel, ohne Rücklauf,
- Fig. 7: eine Draufsicht auf eine erfindungsgemässe End- schaltereinheit in der ausgefahrenen Position der Spindel, mit Rücklauf,
- Fig. 8: eine Draufsicht auf eine erfindungsgemässe End- schaltereinheit in einer ersten Neutralstellung, und
- Fig. 9: eine Draufsicht auf eine erfindungsgemässe End- schaltereinheit in einer zweiten Neutral-Stellung.

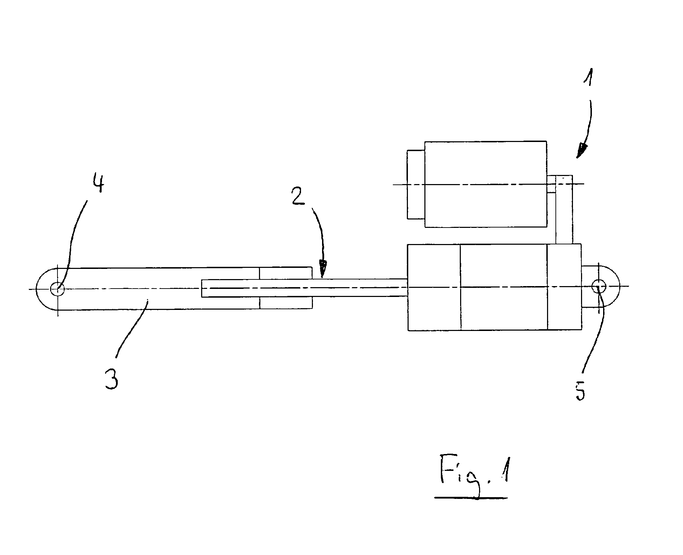

Figur 1 zeigt die grundsätzliche Anordnung eines gattungsgemässen Linearantriebs. Dieser enthält im wesentlichen eine Antriebseinheit 1 (mit einem Antriebsmotor und einem Untersetzungsgetriebe) sowie eine von der Antriebseinheit 1 angetriebene Spindel 2, die in einem linear bewegbaren Schubrohr 3 geführt ist. Ein Gabelkopf 4 dient zur Befestigung eines zu bewegenden Teiles (nicht dargestellt), während der Linearantrieb selber mittels eines Befestigungsteiles 5 irgendwo befestigt werden kann.

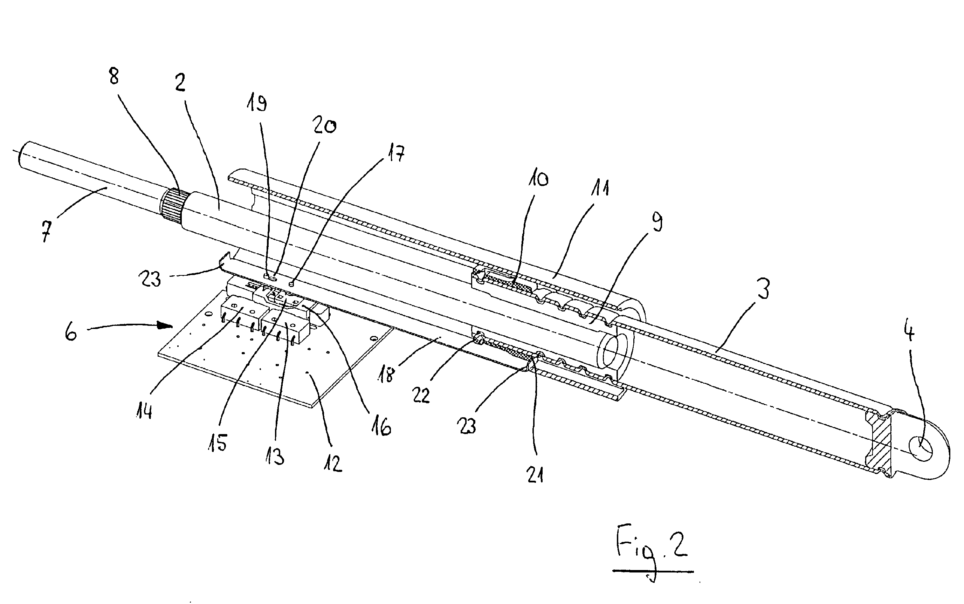

Die Figur 2 zeigt einen 3D-Teilschnitt durch ein Schubrohr 3 mit einer Spindel 2 in ausgefahrener Position bei einem Linearantrieb mit einer erfindungsgemässen Endschaltereinheit 6. Unter der 'ausgefahrenen Position' ist diejenige Position zu verstehen, bei der die Spindel 2 ganz (maximal) aus dem Schubrohr 3 herausgedreht bzw. herausgefahren ist. Umgekehrt ist unter der 'eingefahrenen Position' ist diejenige Position zu verstehen, bei der die Spindel 2 ganz (maximal) in das Schubrohr 3 hineingedreht bzw. hineingefahren ist.

Die Spindel 2 wird von einer Antriebsachse 7 der Antriebseinheit 1 angetrieben. Antriebsachse 7 und Spindel 2 sind allerdings nicht starr miteinander verbunden, zwischengeschaltet ist eine sogenannte (nicht dargestellte) Schlingfederbremse (oder allgemeiner ausgedrückt: Bremsvorrichtung zur Übertragung oder Abbremsung von Drehbewegungen), die auf eine Verzahnung 8 der Antriebsachse 7 aufgesetzt ist. Die Schlingfederbremse dient dem Zweck, einerseits eine Drehkraftübertragung von der Antriebsachse 7 auf die Spindel 2 zu ermöglichen, andererseits aber eine Drehkraftübertragung von der Spindel 2 auf die Antriebsachse 7 zu bremsen bzw. zu verhindern.

Die eigentliche Übertragung der Drehbewegung der Spindel 2 auf die lineare Bewegung des Schubrohrs 3 erfolgt durch eine Spindelmutter 9, die fest mit dem Schubrohr 3 verbunden ist. Der Einfachheit halber ist ein Spindelgewinde der Spindel 2 und ein Innengewinde der Spindelmutter 9 nicht dargestellt.

Am unteren Ende des Schubrohrs 3 ist eine Schubrohrführung 10 angebracht. Mit der Schubrohrführung 10 wird das Schubrohr 3 in einem fest mit der Antriebseinheit 1 verbundenen Mantelrohr 11 geführt. Der besseren Übersicht wegen ist die Antriebseinheit 1 mit Ausnahme der Antriebsachse 7 hier nicht dargestellt.

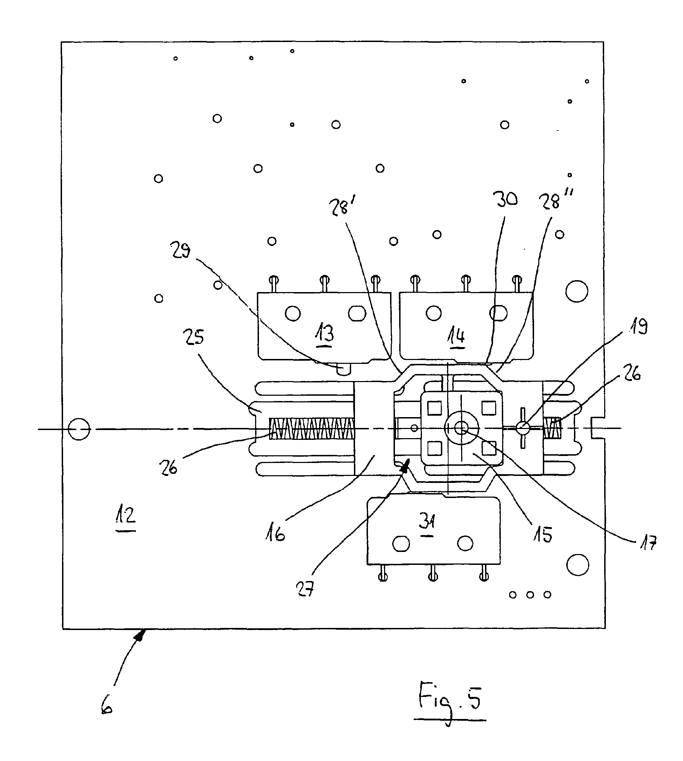

Ebenfalls fest verbunden mit der Antriebseinheit 1 ist eine Printplatine 12, auf der die erfindungsgemässe Endschaltereinheit 6 angeordnet ist. Die letztere enthält unter anderem einen ersten Endschalter 13 zur Detektierung der ausgefahrenen Position des Schubrohrs 3 bzw. der Spindel 2 und einen zweiten Endschalter 14 zur Detektierung der eingefahrenen Position des Schubrohrs 3 bzw. der Spindel 2. Ebenfalls sichtbar sind ein Schieber 15 und ein Schaltteil 16. Der Schieber 15 ist über einen Befestigungsstift 17 fest mit einer Schaltstange 18 verbunden. Das Schaltteil 16 hat einen Führungsstift 19, der in einem länglichen Führungsschlitz 20 der Schaltstange 18 gleitet. Wegen der festen Verbindung zwischen der Schaltstange 18 und dem Schieber 15 macht der letztere jede Bewegung der Schaltstange 18 mit. Das Schaltteil 16 hingegen ist gegenüber dem Schieber 15 verschiebbar. Weitere Erläuterungen zu den Bestandteilen und zu der Funktion der Endschaltereinheit vgl. die Beschreibung der Figuren 5 - 9.

Weiterhin ersichtlich aus der Figur 2 ist eine Vorderkante 21 und eine Hinterkante 22 der Schubrohrführung 10. Wie Figur 2 zeigt, ist die Schaltstange 18, die ihrerseits zwischen dem Schubrohr 3 und dem Mantelrohr 11 geführt ist sowohl am vorderen wie auch am hinteren Ende mit je einer Abwinkelung 23 versehen. Beim Ausfahren des Schubrohrs 3 erfasst die Vorderkante 21 der Schubrohrführung 10 die eine Abwinkelung 23 der Schaltstange 18 und zieht die letztere in die in Figur 2 gezeigte Position. Dies bewirkt, dass der Schieber 15 und damit auch das Schaltteil 16 mitgezogen werden, wodurch das Schaltteil in den Bereich des ersten Endschalters 13 gelangt, wonach bei Betätigung des ersten Endschalters 13 das Ausfahren des Schubrohrs 3 durch Ausschalten der Antriebseinheit 1 (elektrisches Ausschalten des Antriebsmotors) in der ausgefahrenen Position gestoppt wird.

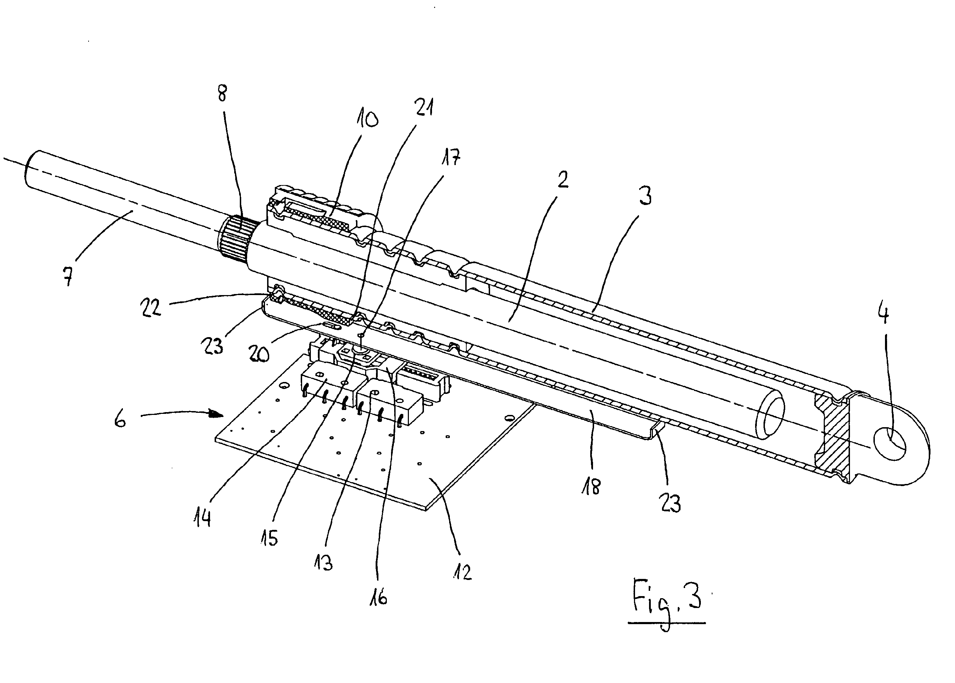

Die Figur 3 ein 3D-Teilschnitt durch ein Schubrohr 3 mit einer Spindel 2 in eingefahrener Position bei einem Linearantrieb gemäss Fig. 2. Beim Einfahren des Schubrohrs 3 erfasst die Hinterkante 22 der Schubrohrführung 10 die andere Abwinkelung 23 der Schaltstange 18 und zieht die letztere in die in Figur 3 gezeigte Position. Dies bewirkt, dass der Schieber 15 und damit auch das Schaltteil 16 mitgezogen werden, wodurch das Schaltteil 16 in den Bereich des zweiten Endschalters 14 gelangt, wonach bei Betätigung des zweiten Endschalters 14 das Einfahren des Schubrohrs 3 durch Ausschalten der Antriebseinheit 1 (elektrisches Ausschalten des Antriebsmotors) in der eingefahrenen Position gestoppt wird. Zur weiteren Vereinfachung ist das Mantelrohr 11 in der Figur 3 nicht dargestellt.

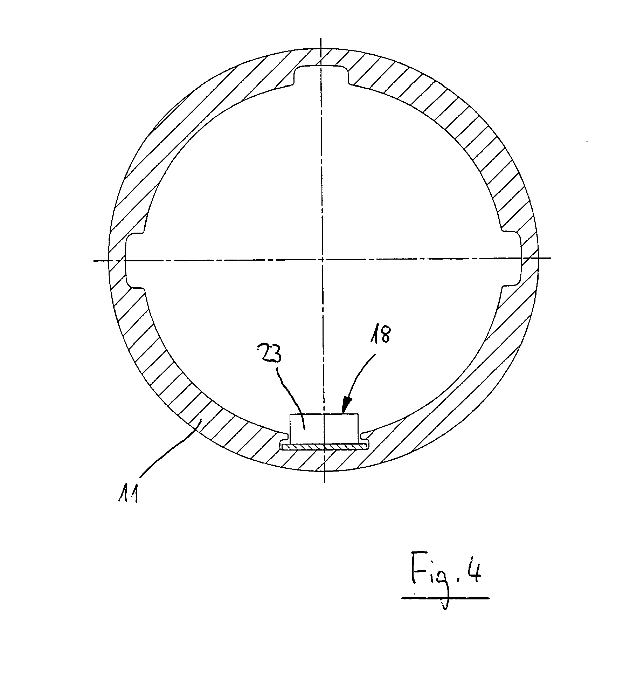

Die Figur 4 zeigt einen Querschnitt durch ein Mantelrohr 11. Hier ist ersichtlich, wie die Schaltstange 18 im Mantelrohr 11 bzw. zwischen Mantelrohr 11 und hier nicht dargestelltem Schubrohr 3 geführt ist. Zu erkennen ist auch eine der Abwinkelungen 23 der Schaltstange 18.

Die Figuren 1 - 4 und die zugehörigen Beschreibungen dienten der Erläuterung der grundsätzlichen Anordnung und der Funktion eines gattungsgemässen Linearantriebs ohne Berücksichtigung der Wirkung der eingesetzten Schlingfederbremse. Wie bereits in der Einleitung erwähnt, ergeben sich beim Einsatz einer Schlingfederbremse besondere Probleme.

Schlingfederbremsen sind wie erwähnt ein äusserst wirksames und einfaches Mittel zur Verhinderung von Drehkraftübertragungen in eine Drehrichtung, in die keine Drehkraftübertragung erfolgen darf, sie haben aber auch den Nachteil, dass konstruktionsbedingt ein kleiner Drehweg bis zum wirksamen Eintritt der vollen Bremswirkung existiert. Wird nun beispielsweise der in den Figuren 1 - 4 beschriebene Linearantrieb in einer Weise betrieben, dass über den Gabelkopf 4 beim Ausfahren eine Last angehoben wird, so wird dies zur Folge haben, dass die Last beim Ausschalten der Antriebseinheit (d.h. beim elektrischen Ausschalten des Antriebsmotors nach dem Ansprechen des ersten Endschalters 13) die Spindel zunächst wieder um einen kleinen Drehwinkel in die entgegengesetzten Richtung zu drehen vermag. Dies wiederum bewirkt ein zwar kleines, im Ansprechbereich des ersten Endschalters 13 (der zur Detektierung der voll ausgefahrenen Position verwendet wird), häufig aber folgenreiches 'Zusammensacken' von Spindel und Spindelrohr. Wird nämlich eine Dauerkontaktsteuerung für das Ein- und Ausfahren verwendet, so genügt dieses Zusammensacken oft, um den elektrischen Kontakt des Endschalters wieder freizugeben, was bedeutet, dass dann die Information an die Motorsteuerung ergeht, dass das Spindelrohr die Endstellung noch nicht erreicht habe. In der Folge kommt es dann (solange der Dauerkontaktbefehl ansteht) zu einer andauernden Selbstunterbrecherschaltung (d.h. es resultiert ein dauerndes Ein- und Ausschalten des Antriebs), wobei in der Folge die elektrische und mechanische Belastung rasch zu einer Überhitzung des Antriebs und sogar zur Zerstörung von Bauteilen führen kann. Aus diesem Grund wird, zumindest für die ausgefahrene Position des Schubrohrs 3, für den Endschalter 13 eine Schalthysterese eingeführt. Vorteilhafterweise wird die Schalthysterese jedoch gleich für beide Endschalter 13, 14 eingeführt, damit die Vorteile der Erfindung auch bei Zugbelastungen genutzt werden können. Diese Schalthysterese wird in der Endschaltereinheit 6 erzeugt.

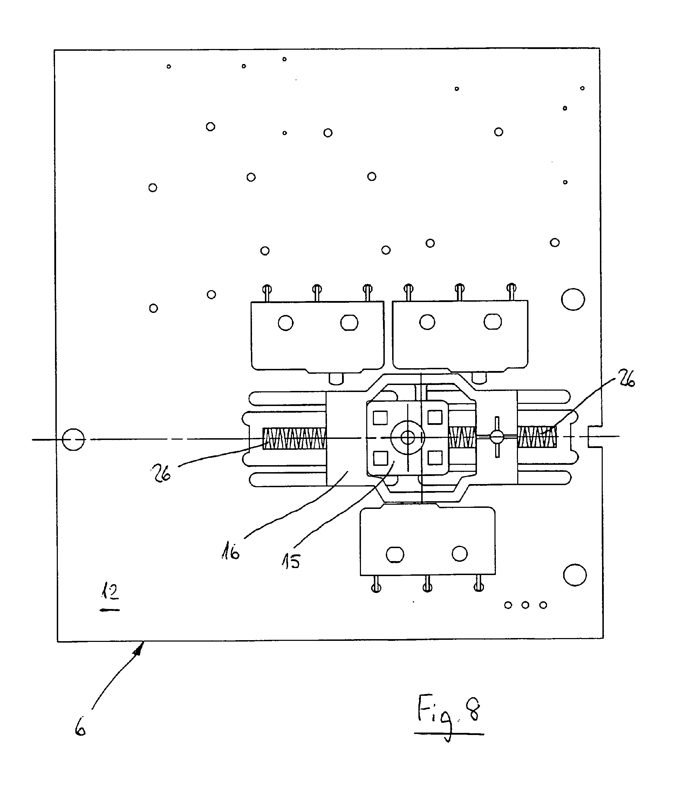

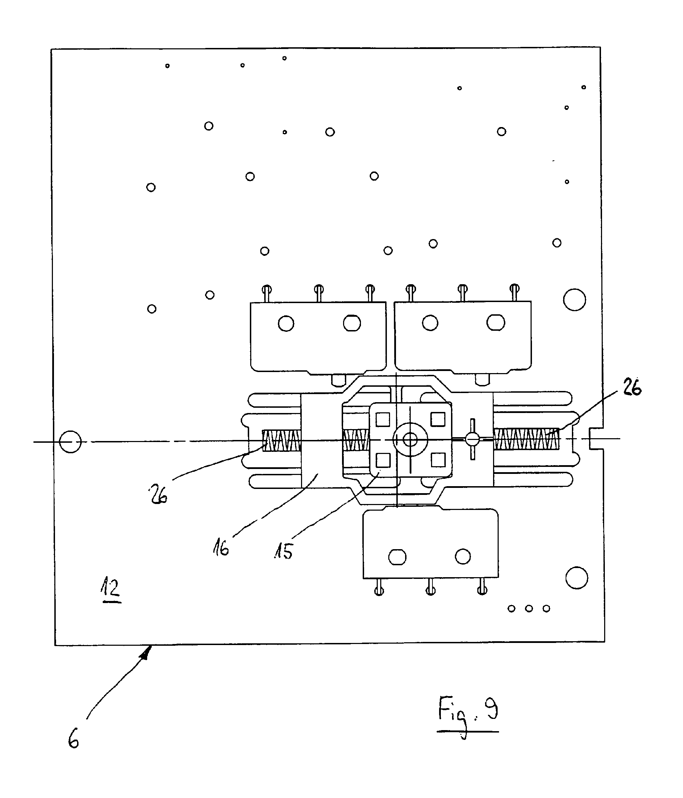

Die Figur 5 zeigt eine Draufsicht auf eine erfindungsgemässe Endschaltereinheit 6 in der eingefahrenen Position der Spindel 2. Sämtliche Bauteile der Endschaltereinheit 6 sind auf der Printplatine 12 angeordnet. Wie bereits erwähnt, ist das Schaltteil 16 gegenüber dem Schieber 15 verschiebbar angeordnet, beide sind für sich jeweils auf einem Führungsstück 25 beweglich angeordnet und linear geführt. Dabei ist der Schieber 15 gegenüber dem Führungsstück 25 beidseitig mit Federn 26 abgestützt. Bei ausgebauter Printplatine 12 würde dies bedeuten, dass der Schieber 15 von den Federn 26 in eine neutrale Mittelstellung (siehe dazu auch Fig. 8 und 9) gedrückt wird. Das Schaltteil 16 weist eine Ausnehmung 27 auf, in der der Schieber 15 gegenüber dem Schaltteil 16 hin- und herbewegbar ist. Wird der Schieber 15 auf die eine oder die andere Seite (entgegen der Federwirkung) genügend weit ausgelenkt, so wird das Schaltteil 16 vom Schieber 15 mitgenommen. Bei einer Bewegungsrichtungsumkehr des Schiebers 15 (in einer maximal ausgelenkten Stellung desselben) erfolgt die Bewegungsrichtungsumkehr des Schaltteiles 16 jedoch erst dann, wenn der Schieber 15 bereits wieder einen Weg (in umgekehrter Richtung) in der Ausnehmung 27 zurückgelegt hat. Daraus ergibt sich eine Hysteresefunktion in der Bewegung. Das Schaltteil 16 seinerseits hat schräg angesetzte Schaltflanken 28', 28", die in den maximal ausgelenkten Stellungen des Schiebers 15 jeweils entweder einen Kontaktstift 29 des ersten Endschalters 13 oder einen Kontaktstift 30 des zweiten Endschalters 14 betätigen. In der Kombination lässt sich so die gewünschte Schalthysterese erzeugen. Durch die Grössenverhältnisse der Ausnehmung 27 und des Schiebers 15 lässt sich die Hysteresefunktion in der Bewegung leicht beherrschen und den Anforderungen (Bremswegverhalten der verwendeten Schlingfederbremse) anpassen.

Ergänzend ist noch zu erwähnen, dass die Haftreibung des Schaltteils 16 auf dem Führungsstück 25 natürlich gross genug sein muss, damit das Schaltteil 16 nicht schon allein durch die Rückstellkraft der Kontaktstifte 29,30 auf die Schaltflanken 28',28" verschoben werden kann.

In der Figur 5 befindet sich die Spindel 2 gegenüber dem Schubrohr 3 in der maximal eingefahrenen Position (vgl. dazu auch Fig. 3). Dadurch befindet sich der Schieber 15 in derjenigen maximal ausgelenkten Schieberstellung, in der die Schaltflanke 28'' des Schaltteils 16 den Kontaktstift 30 des zweiten Endschalters 14 kontaktiert und wodurch die Einfahrbewegung des Linearantriebes in dieser Position gestoppt wird. Beim Abschalten der Antriebseinheit 1 erfolgt zwar das erwähnte 'Zusammensacken' zwischen Schubrohr 3 und Spindel 2, es wirkt sich hier aber nicht negativ aus weil der zweite Endschalter 14 im kontaktierten Zustand (Kontaktstift 30 betätigt) bleibt.

Im weiteren ist aus der Figur 5 noch ein Not-Endschalter 31 ersichtlich, der im Zusammenhang mit der Hysteresefunktion jedoch nicht von Belang ist und im Normalbetrieb immer kontaktiert ist. Der Not-Endschalter 31 ist für den Fall vorgesehen, dass einer der Endschalter 13,14 nicht funktioniert und die Auslenkbewegungen des Schiebers 15 und des Schaltteils 16 nicht rechtzeitig gestoppt werden. Das Schaltteil 16 verlässt dann den Bereich, in dem der Kontaktstift des Not-Endschalters 31 permanent gedrückt ist und in der Folge wird die Stromzufuhr zum Antriebsmotor komplett unterbrochen.

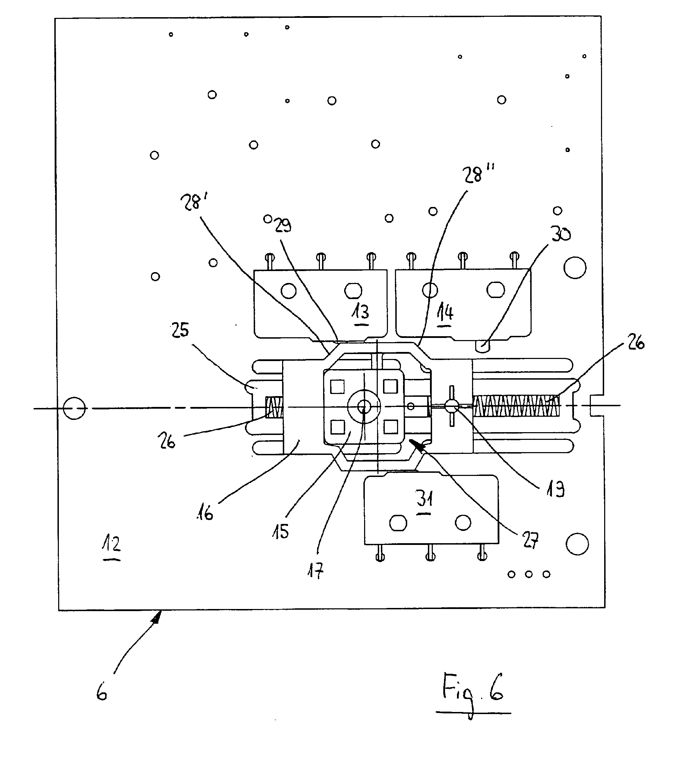

In der Figur 6 befindet sich die Spindel 2 gegenüber dem Schubrohr 3 in der maximal ausgefahrenen Position (vgl. dazu auch Fig. 2), und zwar in einer Position, die Schubrohr 3 und Spindel 2 unmittelbar vor dem Ansprechen der Schlingfederbremse und dem dadurch verursachten geringen Rücklauf bzw. 'Zusammensacken' einnehmen. Der Schieber 15 befindet sich in derjenigen maximal ausgelenkten Schieberstellung, in der die Schaltflanke 28' des Schaltteils 16 den Kontaktstift 29 des ersten Endschalters 13 kontaktiert, wodurch die Ausfahrbewegung des Linearantriebes in dieser Position gestoppt wird.

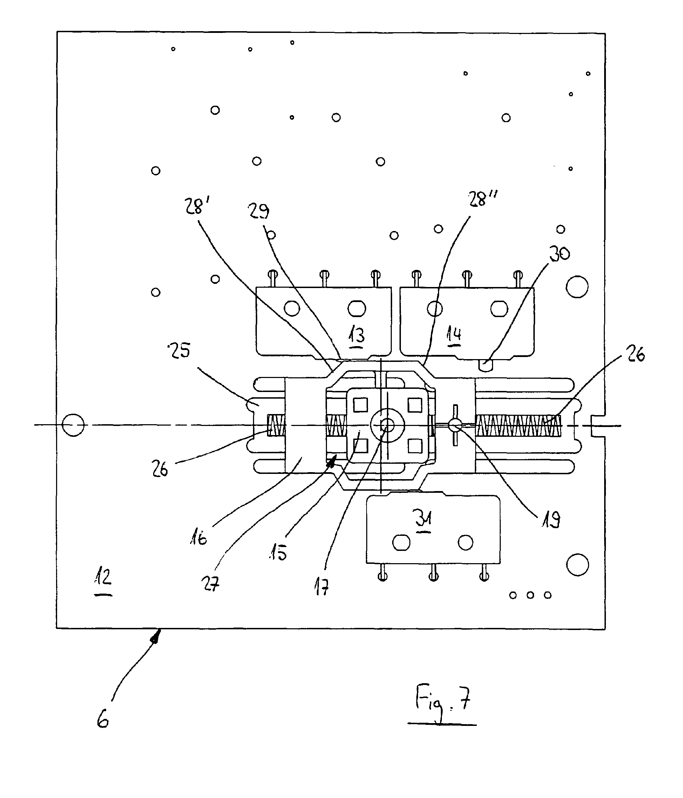

In der Figur 7 befindet sich die Spindel 2 gegenüber dem Schubrohr 3 noch immer in der maximal ausgefahrenen Position (vgl. dazu auch Fig. 2), und zwar in einer Position, die Schubrohr 3 und Spindel 2 unmittelbar nach dem Ansprechen der Schlingfederbremse und dem dadurch verursachten geringen Rücklauf bzw. 'Zusammensacken' einnehmen. Wegen dem geringen Rücklauf der Spindel 2 wird die Schaltstange 18 und damit auch der Schieber 15 wieder etwas in die Gegenrichtung verschoben. Das Schaltteil 16 hingegen bleibt noch in der Stellung, die es unmittelbar vor dem Ansprechen der Schlingfederbremse erreicht hatte (vgl. dazu Fig. 6). Der erste Endschalter 13 befindet sich noch immer im kontaktierten Zustand. Um diese Wirkung sicherzustellen muss natürlich die Dimensionierung der Ausnehmung 27 und des Schiebers 15 so erfolgen, dass der Rücklauf bzw. Bremswegeinfluss der Schlingfederbremse nicht grösser ist als der Bewegungsspielraum, den der Schieber 15 in der Ausnehmung 27 hat. Somit wird die gewünschte Schalthysterese erreicht, die verhindert, dass der störende Selbstunterbrechungseffekt auftreten kann.

Die Figuren 8 und 9 zeigen schliesslich noch Draufsichten auf die Endschaltereinheit in einer ersten und einer zweiten Neutralstellung. Die Spindel 2 befindet sich gegenüber dem Schubrohr 3 weder in der maximal ausgefahrenen noch in der maximal eingefahrenen Position. Das heisst, dass weder die Vorderkante 21 noch die Hinterkante 22 der Schubrohrführung 10 die eine oder die andere Abwinkelung 23 der Schaltstange 18 berührt und die Stellung der Schaltstange 18 in diesen Zwischenlagen somit nicht von der gegenseitigen Position von Schubrohr 3 und Spindel 2 abhängt. Vielmehr wird hier der Schieber 15 (mit der Schaltstange 18) zufolge der Wirkung der Federn 26 in eine Mittelstellung gedrückt und das Schaltteil 16 nimmt in der Folge die erste oder die zweite Neutralstellung ein, je nachdem aus welcher Endposition die Endschaltereinheit 6 in die Mittelstellung gelangte.

Eine weitere Sicherheitsmassnahme ist im übrigen auch noch für den Fall vorgesehen, dass der Befestigungsstift 17, der den Schieber 15 mit der Schaltstange 18 verbindet, bricht. Im Normalbetrieb wird die Bewegung der Schaltstange 18 via den Befestigungsstift 17 auf den Schieber 15 und schliesslich auf das Schaltteil 16 übertragen (vgl. dazu Fig. 7). Falls der Befestigungsstift 17 bricht, wird die Bewegung der Schaltstange 18 letztlich vom Führungsstift 19 direkt auf das Schaltteil 16 übertragen, nämlich genau dann, wenn der Führungsstift eines der Enden des länglichen Führungsschlitzes 20 in der Schaltstange 18 erreicht (vgl. dazu auch Fig. 2,3). Dazu ist der Führungsschlitz 20 geringfügig länger als der maximale Auslenkweg der Schaltstange 18 (was aus den Figuren 2 und 3 aber wegen der Grössenverhältnisse nicht ersichtlich ist). Auf diese Weise wird - wie mit dem bereits früher erwähnten Not-Endschalter 31 - eine sehr hohe Sicherheit bezüglich sogenannter "Erstfehlerfälle" erreicht, indem nämlich ein zweites Mittel zur Sicherstellung bestimmter Funktionen eingesetzt wird. Bei bestimmten Anwendungen von Linearantrieben, z.B. bei Medizinalanwendungen, ist dies von grösster Bedeutung.

### Bezugsziffernliste:

- 1: Antriebseinheit
- 2: Spindel
- 3: Schubrohr
- 4: Gabelkopf
- 5: Befestigungsteil
- 6: Endschaltereinheit
- 7: Antriebsachse
- 8: Verzahnung
- 9: Spindelmutter
- 10: Schubrohrführung
- 11: Mantelrohr (auch Führungsrohr)
- 12: Printplatine
- 13: erster Endschalter (für ausgefahrene Position)
- 14: zweiter Endschalter (für eingefahrene Position)
- 15: Schieber
- 16: Schaltteil
- 17: Befestigungsstift (des Schiebers)
- 18: Schaltstange
- 19: Führungsstift (des Schaltteils)
- 20: Führungsschlitz
- 21: Vorderkante (der Schubrohrführung)
- 22: Hinterkante (der Schubrohrführung)
- 23: Abwinkelung (der Schaltstange)
- 24: nicht verwendet
- 25: Führungsstück
- 26: Feder
- 27: Ausnehmung
- 28', 28": Schaltflanken
- 29: Kontaktstift des ersten Endschalters
- 30: Kontaktstift des zweiten Endschalters
- 31: Not-Endschalter

## Patentansprüche

1. Endschaltereinheit (6) für einen Linearantrieb mit
- einer Antriebseinheit (1) mit einem Antriebsmotor,
- einer in einem linear bewegbaren Schubrohr (3) geführten und von der Antriebseinheit (1) angetriebenen Spindel (2) und
- einer zwischen dem Schubrohr (3) und einem Mantelrohr (11) ebenfalls linear bewegbaren Schaltstange (18) und
- einer zwischen einer Antriebsachse (7) der Antriebseinheit (1) und der Spindel (2) eingebauten Bremsvorrichtung zur Übertragung oder Abbremsung von Drehbewegungen,
wobei mindestens ein Endschalter der Endschaltereinheit (6) von der Schaltstange (18) betätigbar ist,
**dadurch gekennzeichnet, dass**
der mindestens eine Endschalter der Endschaltereinheit bezüglich einer Verschiebebewegung der Schaltstange (18) zumindest in einer ausgefahrenen Position des Schubrohrs (3) eine Schalthysterese aufweist, wobei die Schalthysterese auf einen im wesentlichen von der Bremsvorrichtung zur Übertragung oder Abbremsung von Drehbewegungen bedingten Ansprechweg beim Ausschalten des Antriebsmotors abgestimmt ist.

2. Endschaltereinheit nach Patentanspruch 1, **dadurch gekennzeichnet, dass** die Bremsvorrichtung zur Übertragung oder Abbremsung von Drehbewegungen eine Schlingfederbremse ist.

3. Endschaltereinheit nach Patentanspruch 1 oder 2, **dadurch gekennzeichnet, dass** der mindestens eine Endschalter der Endschaltereinheit (6) bezüglich einer Schaltposition der Schaltstange (18) sowohl in einer ausgefahrenen Position wie auch in einer eingefahrenen Position des Schubrohrs (3) eine Schalthysterese aufweist.

4. Endschaltereinheit nach einem der Patentansprüche 1 bis 3, **dadurch gekennzeichnet, dass** der mindestens eine Endschalter mechanisch oder kontaktlos arbeitet.

5. Endschaltereinheit nach einem der Patentansprüche 1 bis 4, **dadurch gekennzeichnet, dass** die Endschaltereinheit (6) einen ersten mechanischen Endschalter (13) für eine ausgefahrene Position des Schubrohrs (3) und einen zweiten mechanischen Endschalter (14) für eine eingefahrene Position des Schubrohrs (3) aufweist.

6. Endschaltereinheit nach Patentanspruch 5, **dadurch gekennzeichnet, dass** der erste und der zweite Endschalter (13,14) von einem gegenüber einem Schieber (15) verschiebbaren Schaltteil (16) betätigbar sind und der Schieber (15) mit der Schaltstange (18) verbunden ist.

7. Endschaltereinheit nach Patentanspruch 6, **dadurch gekennzeichnet, dass** der Schieber (15) und das gegenüber dem Schieber (15) verschiebbare Schaltteil (16) von einem Führungsstück (25) linear geführt werden und der Schieber (15) gegenüber dem Führungsstück (25) beidseitig durch Federn (26) abgestützt ist.

8. Endschaltereinheit nach Patentanspruch 6 oder 7, **dadurch gekennzeichnet, dass** das Schaltteil (16) eine Ausnehmung (27) aufweist, in der der Schieber (15) gegenüber dem Schaltteil (16) hin- und herbewegbar ist, das Schaltteil (16) vom Schieber (15) mitnehmbar ist und die Mitnahmebewegung zufolge der Verschiebebewegung der Schaltstange die Schalthysterese bewirkt.

9. Endschaltereinheit nach Patentanspruch 6, **dadurch gekennzeichnet, dass** der erste und der zweite Endschalter (13,14) der Endschaltereinheit über das Schaltteil (16) und den Schieber (15) und einen den Schieber (15) mit der Schaltstange (18) verbindenden Befestigungsstift (17) betätigbar ist und dass weiterhin am Schaltteil (16) ein Führungsstift (19) angebracht ist über den der Linearantrieb beim Versagen des Befestigungsstiftes abschaltbar ist.

10. Endschaltereinheit nach Patentanspruch 5, **dadurch gekennzeichnet, dass** der Linearantrieb beim Versagen des ersten und des zweiten Endschalters (13,14) über einen Not-Endschalter (31) abschaltbar ist.

## Claims

1. A limit switch unit (6) for a linear drive with
- a drive unit (1) with a drive motor,
- a spindle (2) guided in a linearly movable thrust tube (3) and driven by the drive unit (1) and
- an actuating rod (18) likewise linearly movable between the thrust tube (3) and a casing tube (3) and
- a braking device installed between a drive axis (7) of the drive unit (1) and the spindle (2) for the transmission or braking of rotary movements,
wherein at least one limit switch of the limit switch unit (6) is able to be actuated by the actuating rod (18),
**characterized in that**
the at least one limit switch of the limit switch unit has a switching hysteresis with respect to a displacement movement of the actuating rod (18) at least in an extended position of the thrust tube (3), wherein the switching hysteresis is matched to a response path dependent substantially on the braking device for the transmission or braking of rotary movements, on switching off the drive motor.

2. The limit switch unit according to Claim 1, **characterized in that** the braking device for the transmission or braking of rotary movements is a wrap spring brake.

3. The limit switch unit according to Claim 1 or 2, **characterized in that** the at least one limit switch of the limit switch unit (6) has a switching hysteresis with respect to a switching position of the actuating rod (18) both in an extended position and also in a retracted position of the thrust tube (3).

4. The limit switch unit according to one of Claims 1 to 3, **characterized in that** the at least one limit switch operates mechanically or in a non-contact manner.

5. The limit switch unit according to one of Claims 1 to 4, **characterized in that** the limit switch unit (6) has a first mechanical limit switch (13) for an extended position of the thrust tube (3) and a second mechanical limit switch (14) for a retracted position of the thrust tube (3).

6. The limit switch unit according to Claim 5, **characterized in that** the first and the second limit switches (13, 14) are able to be actuated by a switching part (16) which is displaceable with respect to a slider (15), and the slider (15) is connected to the actuating rod (18).

7. The limit switch unit according to Claim 6, **characterized in that** the slider (15) and the switching part (16) which is displaceable with respect to the slider (15) are guided linearly by a guide piece (25), and the slider (15) is supported on both sides with respect to the guide piece (25) by springs (26).

8. The limit switch unit according to Claim 6 or 7, **characterized in that** the switching part (16) has a recess (27) in which the slider (16) is movable to and fro with respect to the switching part (16), the switching part (16) is able to be entrained by the slider (15) and the entrainment movement brings about the switching hysteresis as a result of the displacement movement of the actuating rod.

9. The limit switch unit according to Claim 6, **characterized in that** the first and the second limit switches (13, 14) of the limit switch unit is able to be actuated via the switching part (16) and the slider (15) and a fastening pin (17) connecting the slider (15) with the actuating rod (18), and that in addition a guide pin (19) is arranged on the switching part (16), via which guide pin the linear drive is able to be switched off on failure of the fastening pin.

10. The limit switch unit according to Claim 5, **characterized in that** on failure of the first and the second limit switch (13, 14), the linear drive is able to be switched off by means of an emergency limit switch (31).

## Revendications

1. Unité d'interrupteur de fin de course (6) pour un entraînement linéaire comprenant
- une unité d'entraînement (1) avec un moteur d'entraînement,
- une broche (2) guidée dans un tube télescopique (3) pouvant être déplacé linéairement et entraînée par l'unité d'entraînement (1) et
- une tige de commutation (18) pouvant être déplacée également linéairement entre le tube télescopique (3) et un tube d'enveloppe (11) et
- un dispositif de freinage monté entre un axe d'entraînement (7) de l'unité d'entraînement (1) et la broche (2) pour la transmission ou le ralentissement de mouvements de rotation,
au moins un fin de course de l'unité de fin de course (6) pouvant être actionné par la tige de commutation (18),
**caractérisée en ce que**
le au moins un fin de course de l'unité de fin de course présente une hystérésis de commutation par rapport à un mouvement de déplacement de la tige de commutation (18) au moins dans une position déployée du tube télescopique (3), l'hystérésis de commutation étant adaptée à une course de réaction conditionnée essentiellement par le dispositif de freinage pour la transmission ou le ralentissement de mouvements de rotation lors de la déconnexion du moteur d'entraînement.

2. Unité de fin de course selon la revendication 1, **caractérisée en ce que** le dispositif de freinage pour la transmission ou le ralentissement de mouvements de rotation est un frein à ressort enroulé.

3. Unité de fin de course selon la revendication 1 ou 2, **caractérisée en ce que** le au moins un fin de course de l'unité de fin de course (6) présente une hystérésis de commutation par rapport à une position de commutation de la tige de commutation (18) aussi bien dans une position déployée que dans une position rentrée du tube télescopique (3).

4. Unité de fin de course selon l'une des revendications 1 à 3, **caractérisée en ce que** le au moins un fin de course travaille de façon mécanique ou sans contact.

5. Unité de fin de course selon l'une des revendications 1 à 4, **caractérisée en ce que** l'unité de fin de course (6) présente un premier fin de course mécanique (13) pour une position déployée du tube télescopique (3) et un second fin de course (14) mécanique pour une position rentrée du tube télescopique (3).

6. Unité de fin de course selon la revendication 5, **caractérisée en ce que** le premier et le second fins de course (13, 14) peuvent être actionnés par une partie de commutation (16) coulissante par rapport à un coulisseau (15) et le coulisseau (15) est relié à la tige de commutation (18).

7. Unité de fin de course selon la revendication 6, **caractérisée en ce que** le coulisseau (15) et la partie de commutation (16) coulissante par rapport au coulisseau (15) sont guidés linéairement par une pièce de guidage (25) et le coulisseau (15) est soutenu par rapport à la pièce de guidage (25) des deux côtés par des ressorts (26).

8. Unité de fin de course selon la revendication 6 ou 7, **caractérisée en ce que** la partie de commutation (16) présente un évidement (27) dans lequel le coulisseau (15) peut se déplacer d'un côté et de l'autre par rapport à la partie de commutation (16), la partie de commutation (16) pouvant être entraînée par le coulisseau (15) et le mouvement d'entraînement entraînant l'hystérésis de commutation en raison du mouvement de déplacement de la tige de commutation,

9. Unité de fin de course selon la revendication 6, **caractérisée en ce que** le premier et le second fins de course (13, 14) de l'unité de fin de course peuvent être actionnés par l'intermédiaire de la partie de commutation (16) et du coulisseau (15) et d'une goupille de fixation (17) reliant le coulisseau (15) à la tige de commutation (18) et **en ce qu'**une broche de guidage (19) est placée également sur la partie de commutation (16), goupille par laquelle l'entraînement linéaire peut être déconnecté lors de la défaillante de la goupille de fixation.

10. Unité de fin de course selon la revendication 5, **caractérisée en ce que** l'entraînement linéaire peut être déconnecté par l'intermédiaire d'un fin de course de secours (31) lors de la défaillance du premier et du second fins de course (13, 14).
